# EUROPÄISCHE PATENTANMELDUNG

(11) **EP 1 174 282 A2**
(43) Veröffentlichungstag der Anmeldung: **23.01.2002**
(21) Anmeldenummer: 01115985.2
(22) Anmeldetag: 30.06.2001
(51) Int. Cl.: B60B 3/04, B60B 7/06

(54) **Aus Stahlblech geformtes Fahrzeugrad**

(30) Priorität: 20.07.2000 DE 10035187
(71) Anmelder: Thyssen Krupp Stahl AG, 40211 Düsseldorf (DE)
(72) Erfinder: Blümel, Klaus, Dipl.-Ing., 46537 Dinslaken (DE); Flehmig, Thomas, Dr.-Ing., 40885 Ratingen (DE)
(74) Vertreter: Cohausz & Florack

(57) **Zusammenfassung**

Die Erfindung betrifft ein aus Stahlblech geformtes Fahrzeugrad aus einer Felge (1) einer Radscheibe (2) und einem Anschraubflansch (3). Die einzelnen Teile (1,2,3) sind miteinander im Überlapp- oder Stumpfstoß gefügt. Da die Radscheibe (2) und der Anschraubflansch (3) jeweils Einzelteile sind, können sie den individuellen Anforderungen angepaßt sein. So kann die Radscheibe (2) nach Designgesichtspunkten gestaltet sein, während der Anschraubflansch (3) durch starke Umformung eine große Bauhöhe für die Unterbringung von Bremselementen schafft.

## Beschreibung

Die Erfindung betrifft ein aus Stahlblech geformtes Fahrzeugrad mit einer Felge für einen Fahrzeugreifen, einer an der Felge befestigten Radscheibe und einem von der Radscheibe getragenen zentralen Anschraubflansch mit einem konzentrischen Lochkreis, wobei die Radscheibe und der Anschraubflansch unter der Felge einen tiefen Bauraum für Bremselemente bilden.

Fahrzeugräder dieser Art sind aus der Praxis bekannt. Die meisten Kraftfahrzeuge werden nämlich als Standard mit solchen, preiswert herzustellenden Fahrzeugrädern ausgerüstet. Bei diesen Rädern sind die Radscheibe und der Anschraubflansch einteilig ausgebildet. Mit ihrem umgebogenen Außenrand ist die Radscheibe im Überlappstoß an der Radfelge befestigt. Alle Teile sind durch Preßformen hergestellt.

Trotz der höheren Anschaffungskosten werden aber häufig Fahrzeugräder aus Leichtmetall bevorzugt, weil sie ein geringeres Gewicht haben, was dem Fahrkomfort und dem Energieverbrauch zugute kommt und weil sie vor allem aufgrund anderer Fertigungsmöglichkeiten, wie Gießen oder Schmieden, vielfältigere und attraktivere Gestaltungsmöglichkeiten erlauben. Dabei erlaubt die Gieß- und Schmiedetechnik auch die Schaffung großer Bauhöhen unterhalb der Felge für die Unterbringung der Bremselemente, wie sie bei Stahlrädern wegen der beim Gießen erforderlichen höheren Temperaturen und beim Schmieden wegen des größeren Umformwiderstandes kaum oder nur unter Inkaufnahme eines hohen Verschleißes an den Umformwerkzeugen zu erreichen sind, obwohl gerade Stahl von der Festigkeit sehr dünne Wandstärken erlauben würde. Nachteilig bei Leichtmetallrädern ist der höhere Fertigungsaufwand. Ohne aufwendiges Nacharbeiten sind die gegossenen und geschmiedeten Räder nämlich nicht brauchbar. Hinzu kommt, daß zur Beseitigung von Unwuchten notwendige Bohrungen Schwachstellen darstellen, die Ausgangspunkt von Rissen sein können. Schließlich muß die Oberfläche von Leichtmetallrädern vor Korrosion geschützt sein.

Der Erfindung liegt die Aufgabe zugrunde, ein Fahrzeugrad aus Stahlblech zu schaffen, das bei geringem Gewicht einen hohen Bauraum für die Unterbringung von Bremselementen unter der Felge erlaubt und darüber hinaus sich vielfältig attraktiv gestalten läßt.

Diese Aufgabe wird bei einem Fahrzeugrad der eingangs genannten Art dadurch gelöst, daß die Radscheibe und der Anschraubflansch zwei miteinander verbundene Einzelteile sind, wobei in der Radscheibe die Designelemente ausgebildet sind und der Anschraubflansch in seinem außerhalb des Lochkreises liegenden Bereich ein Verhältnis von axialer Bauhöhe zu radialer Erstreckung hat, das größer ist als das entsprechende Verhältnis bei der Radscheibe.

Durch die Zweiteilung von Radscheibe und Anschraubflansch lassen sich beide Teile optimal den jeweiligen Anforderungen anpassen, das heißt, daß die Radscheibe großflächig ausschließlich nach Designgesichtspunkten gestaltet werden kann, während der Anschraubflansch in einem möglichst kleinen radialen Bereich für die wegen der geforderten großen Bauhöhe erforderliche große Umformbarkeit ausgelegt ist.

Nach einer Ausgestaltung der Erfindung ist zur Erzielung einer großen axialen Bauhöhe vorgesehen, daß der Anschraubflansch im Bereich außerhalb des Lochkreises einen sich axial erstreckenden hülsenförmigen Abschnitt aufweist. Um diesen Abschnitt möglichst problemlos an die Radscheibe anschließen zu können, sollte sich am Außenrand des hülsenförmigen Abschnittes ein radialer Kragen anschließen, der mit dem Innenrand der Radscheibe verbunden ist.

Die Radscheibe läßt sich vielfältig gestalten. Vor allem kann sie Löcher verschiedener Form aufweisen. Aber nicht nur hinsichtlich der Formgebung, sondern auch hinsichtlich des Materials bietet die Radscheibe verschiedene Möglichkeiten. Ein attraktives Aussehen erhält sie vor allem dann, wenn sie aus Edelstahl, insbesondere nicht rostendem Edelstahl, besteht.

Nach einer weiteren Ausgestaltung der Erfindung kann außenseitig am Anschraubflansch eine Abdeckkappe lösbar befestigt sein, die den Anschraubflansch und gegebenenfalls einen durch den Anschraubflansch sich erstreckenden Achsstumpf schützt. Vorzugsweise weist die Abdeckkappe rückseitig vorspringende Klammern auf, die in Ausnehmungen am Anschraubflansch einrasten können.

Die einzelnen Teile können miteinander im Überlapp- oder Stumpfstoß gefügt sein. Verschiedene Schweißverfahren aber auch Kleben sind geeignete Fügeverfahren.

Im folgenden wird die Erfindung anhand einer verschiedene Ausführungsbeispiele im Teilschnitt darstellenden Zeichnung näher erläutert.

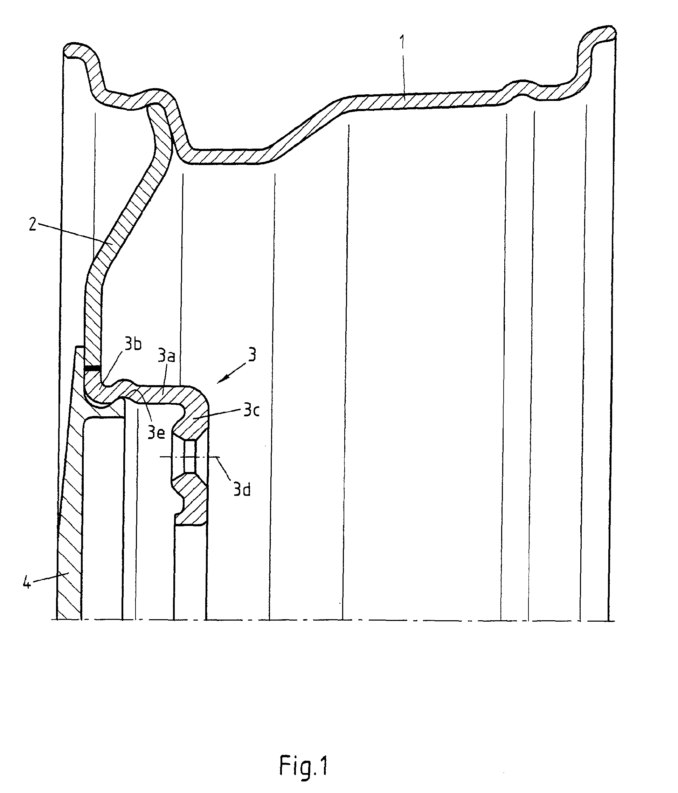

Das in Figur 1 dargestellte Fahrzeugrad besteht aus einer Felge 1, einer Radscheibe 2, einem Anschraubflansch 3 und einer Abdeckkappe 4.

Die Felge 1 ist aus einem zu einem Ring zusammengeschweißten Stahlblechstreifen hergestellt, der durch Ringwalzen die notwendige Form für das Felgenbett und die Felgenhörner bekommt.

Die Radscheibe 2 ist aus einem gestanzten ebenen Blechring durch Pressen hergestellt.

Das Ausgangsmaterial des Anschraubflansches 3 ist ebenfalls ein ebener Blechring, der tiefgezogen wird. Dabei werden ein hülsenförmiger Abschnitt 3a und ein Kragen 3b sowie ein flanschartiger Teil 3c erhalten. Vor diesem Umformvorgang oder aber nachher werden in dem flanschartigen Teil 3c Bohrungen eines Lochkreises 3d zum Befestigen des Rades mit Bolzen am Fahrzeug hergestellt. Bei dem Umformvorgang kann entsprechend der zu erwartenden örtlich unterschiedlichen Belastungen eine unterschiedliche Materialverteilung vorgenommen werden, wie die Figur 1 deutlich zeigt. Wie die Figur 1 ebenfalls deutlich zeigt, sind die Radscheibe 2 und der Anschraubflansch 3 im Stumpfstoß und die Radscheibe 2 und die Felge 1 im Überlappstoß gefügt. Für das Fügen bieten sich alle thermischen Schweißverfahren, wie WIG, MIG, MAG, Elektronenstrahl-, Laserstrahl- oder Reibeschweißen an. Bei Überlappstößen sind auch andere Verbindungstechniken, wie Kleben oder Nieten, möglich.

Eine Abdeckkappe 4, die mit einer rückseitigen Klammer 4a in eine Ausnehmung 3e des hülsenförmigen Abschnittes 3a eingreift, deckt den gesamten Anschraubflansch 3 und auch noch den Fügebereich zwischen Anschraubflansch 3 und Radscheibe 2 ab.

Wie Figur 1 zeigt, beginnt sehr nahe am Lochkreis 3d wegen des sich axial erstreckenden hülsenförmigen Abschnittes 3a ein hoher und tiefer Bauraum für die Unterbringung von Bremselementen. Da der Anschraubflansch 3 ein verhältnismäßig kleines Bauteil ist, läßt er sich problemlos mit entsprechenden Materialverstärkungen vor allem durch Tiefziehen formen. Der hülsenförmige Abschnitt 3a kann dabei weiter durch axial verlaufende Sicken verstärkt sein. Wegen der deshalb kleinen radialen Erstreckung des Anschraubflansches 3 ergibt sich ein verhältnismäßig großer radialer Bereich für die Radscheibe 2, die nach Designaspekten gestaltet werden kann, insbesondere kann sie durch Lochungen und Profilierungen die unterschiedlichsten Designmerkmale wie Streben, Speichen und Belüftungsöffnungen aufweisen. Die freie Gestaltungsmöglichkeit der Radscheibe erlaubt es auch, sie hohl zu gestalten, was sowohl zur Verbesserung der Optik als auch zur Versteifung ausgenutzt werden kann. Zur Versteifung können die Hohlräume auch noch ausgeschäumt sein.

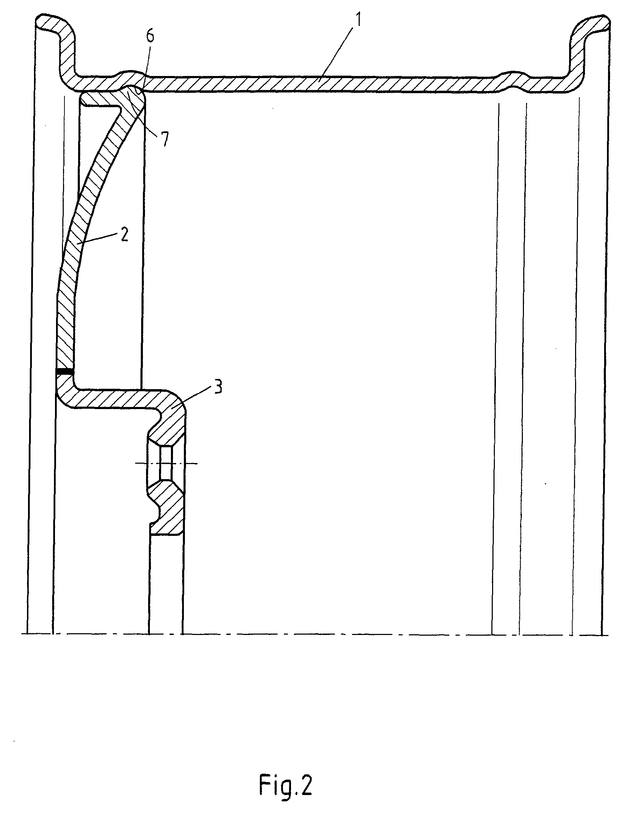

Während beim Ausführungsbeispiel der Figur 1 der Überlappstoß zwischen der Felge 1 und der Radscheibe 2 im wesentlichen in einer Radialebene liegt, liegt er beim Ausführungsbeispiel der Figur 2 auf einer axial sich erstreckenden Zylinderfläche. Darüber hinaus ist die Fügeverbindung durch einen zusätzlichen Formschluß in Form einer umlaufenden Sicke 6 in der Felge 1 und einem umlaufenden Vorsprung 7 der Radscheibe 2 unterstützt.

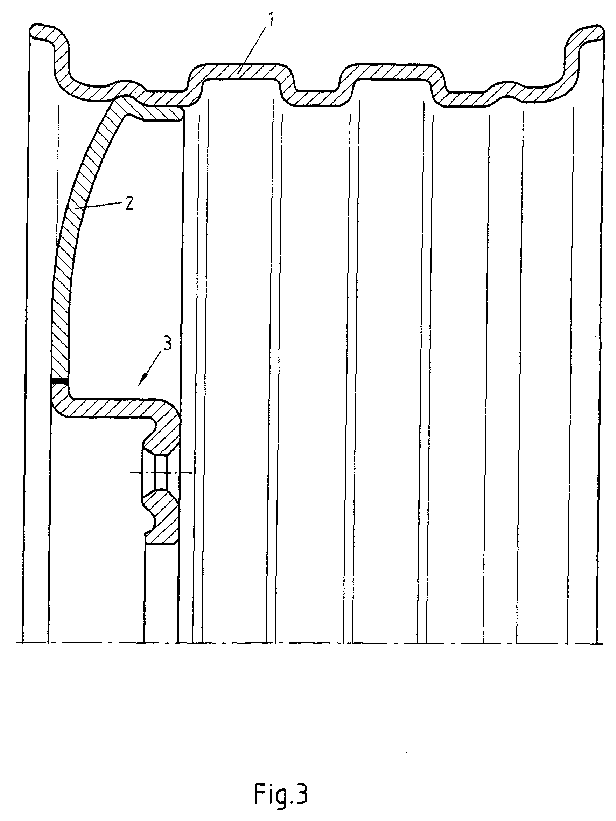

Während beim Ausführungsbeispiel der Figur 2 sich der Überlappstoß zwischen Felge 1 und Radscheibe 2 nach außen erstreckt, erstreckt er sich beim Ausführungsbeispiel der Figur 3 nach innen.

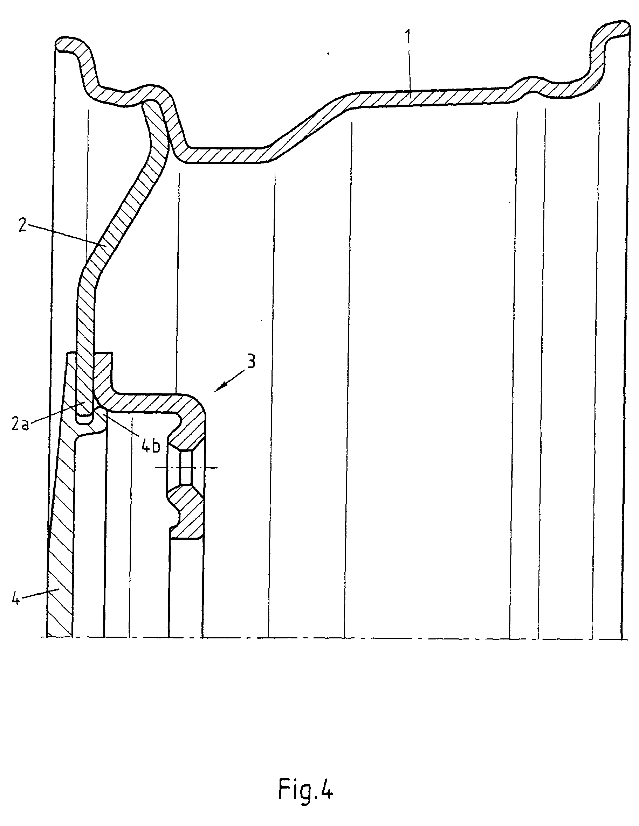

Das Ausführungsbeispiel der Figur 4 unterscheidet sich von dem der Figur 1 in der Fügeverbindung zwischen der Radscheibe 2 und dem Anschraubflansch 3. In diesem Fall handelt es sich um einen Überlappstoß. Dabei wird der überstehende innere Rand 2a von der entsprechend gestalteten Klammer 4b der Abdeckscheibe der Abdeckkappe 4 zum Hintergreifen genutzt.

## Patentansprüche

1. Aus Stahlblech geformtes Fahrzeugrad mit einer Felge (1) für einen Fahrzeugreifen, einer an der Felge (1) befestigten Radscheibe (2) und einem von der Radscheibe (2) getragenen, zentralen Anschraubflansch (3) mit einem konzentrischen Lochkreis (3c), wobei die Radscheibe (2) und der Anschraubflansch (3) unter der Felge (1) einen tiefen Bauraum für Bremselemente bilden,
**dadurch gekennzeichnet, daß** die Radscheibe (2) und der Anschraubflansch (3) zwei miteinander verbundene Einzelteile sind, wobei in der Radscheibe (2) Designelemente (2a) ausgebildet sind und der Anschraubflansch (3) in seinem außerhalb des Lochkreises (3d) liegenden Bereich ein Verhältnis von axialer Bauhöhe zu radialer Erstreckung hat, das größer als das entsprechende Verhältnis bei der Radscheibe (2) ist.

2. Fahrzeugrad nach Anspruch 1,
**dadurch gekennzeichnet, daß** der Anschraubflansch (3) im Bereich außerhalb des Lochkreises (3) einen sich axial erstreckenden hülsenförmigen Abschnitt (3a) aufweist.

3. Fahrzeugrad nach Anspruch 1 oder 2,
**dadurch gekennzeichnet, daß** sich am Außenrand des hülsenförmigen Abschnittes (3a) ein radialer Kragen (3b) anschließt, der mit dem Innenrand der Radscheibe (2) verbunden ist.

4. Fahrzeugrad nach einem der Ansprüche 1 bis 3,
**dadurch gekennzeichnet, daß** die Radscheibe (2) aus Edelstahl besteht.

5. Fahrzeugrad nach einem der Ansprüche 1 bis 4,
**dadurch gekennzeichnet, daß** die Radscheibe (2) zur Bildung von Designelementen (2a) gelocht ist.

6. Fahrzeugrad nach einem der Ansprüche 1 bis 5,
**dadurch gekennzeichnet, daß** außenseitig am Anschraubflansch (3) eine Abdeckkappe (4) lösbar befestigt ist.

7. Fahrzeugrad nach Anspruch 6,
**dadurch gekennzeichnet, daß** die Abdeckkappe (4) rückseitig vorspringende Klammern (5a,5b) aufweist, die in Ausnehmungen (4e) am Anschraubflansch (3) einrasten.

8. Fahrzeugrad nach einem der Ansprüche 1 bis 7,
**dadurch gekennzeichnet, daß** die einzelnen Teile (1,2,3) miteinander im Überlapp- oder Stumpfstoß gefügt sind.
